# EUROPÄISCHE PATENTANMELDUNG

(11) **EP 1 467 090 A2**
(43) Veröffentlichungstag der Anmeldung: **13.10.2004**
(21) Anmeldenummer: 04005380.3
(22) Anmeldetag: 06.03.2004
(51) Int. Cl.: F03B 7/00, E03C 1/10

(54) **Druckminderer mit Schmutzfänger**

(30) Priorität: 08.04.2003 DE 10316274
(71) Anmelder: HANS SASSERATH & CO KG, 41352 Korschenbroich (DE)
(72) Erfinder: Hecking, Willi, 41238 Mönchengladbach (DE)
(74) Vertreter: Weisse, Renate Dr.

(57) **Zusammenfassung**

Bei einem Druckminderer mit einer Einlaßdruckkammer (14), die durch einen zylindrischen Schmutzfänger (68) in eine einlaßseitige und eine regelventilseitige Teilkammer (70 bzw. 72) unterteilt ist, sind in der einlaßseitigen Teilkammer (70) angrenzend an den Schmutzfänger (68) Rückspülmittel (74) zur Erzeugung einer Rückspül-Strömung durch den Schmutzfänger (68) aus der regelventilseitigen Teilkammer (72) vorgesehen. Diese Rückspülmittel (74) weisen einen Ringkörper (76) mit einer Ringkammer (78) auf, der auf der Außenseite mit zwei im Abstand voneinander angeordneten Dichtringen (80,82) abdichtend in einem Gehäuse (62) des Druckminderers geführt ist und den Schmutzfänger (68) umgibt. An dem Ringkörper (76) axial sind vorstehende, an den Schmutzfänger (68) angrenzende, zu dem Schmutzfänger (68) hin offene und mit der Ringkammer (78) des Ringkörpers (76) verbundene Saugrippen (84,86,88,90) vorgesehen. Der Ringkörper (76) ist um den Schmutzfänger (68) herum drehbar. Die Ringkammer ist über ein Absperrventil (96) mit einem Abfluß verbindbar.

## Beschreibung

Die Erfindung betrifft einen Druckminderer mit einer Einlaßdruckkammer, die durch einen zylindrischen Schmutzfänger in eine einlaßseitige und eine regelventilseitige Teilkammer unterteilt ist, bei welcher in der einlaßseitigen Teilkammer angrenzend an den Schmutzfänger Rückspülmittel zur Erzeugung einer Rückspül-Strömung durch den Schmutzfänger aus der regelventilseitigen Teilkammer vorgesehen sind.

Druckminderer haben die Aufgabe, den Wasserdruck z.B. in einem Hauswassersystem auf einem vorgegebenen Wert zu halten, auch wenn der Druck in einer Versorgungsleitung höher ist. Ein Druckminderer weist zu diesem Zweck eine federbelastete Regelmembran auf, welche eine Regeldruckkammer abschließt. Die Regelmembran ist mit einem Ventilstößel verbunden, der sich durch einen Ventildurchgang eines Ventilsitzes erstreckt und an seinem Ende in einer Ausgangsdruckkammer einen Ventilschließkörper trägt. Stromauf von dem Ventilsitz ist eine Einlaßdruckkammer gebildet, in welcher der Druck aus der Versorgungsleitung herrscht. Stromab von dem Ventilsitz herrscht ein geregelter Ausgangsdruck. Dieser Ausgangsdruck wird in die Regeldruckkammer übertragen. Steigt der Ausgangsdruck über den durch die Federbelastung der Regelmembran bestimmten Wert an, führt die Membran unter der Wirkung des Ausgangsdrucks gegen die Federbelastung einen Hub aus. Der Ventilstößel bewegt den Ventilschließkörper gegen den Ventilsitz, wodurch der Ventildurchgang stärker gedrosselt wird und der Ausgangsdruck wieder auf den Sollwert absinkt.

Ein bekannter Druckminderer ist als eine zusammenhängende Baugruppe ausgebildet, die als Ganzes in ein Armaturengehäuse einsetzbar ist. Das Armaturengehäuse weist einen Einlaßstutzen und einen Auslaßstutzen auf, mit denen das Armaturengehäuse in eine Wasserleitung eingebaut werden kann. Der Einlaßanschluß steht mit der Einlaßdruckkammer in Verbindung, und die Ausgangsdruckkammer ist mit dem Auslaßstutzen verbunden. Die Druckminderer-Baugruppe enthält einen Druckminderer-"Unterteil" und einen Druckminderer-"Oberteil". Der Druckminderer-Unterteil ist schalenförmig sich verjüngend ausgebildet und durch die Regelmembran abgeschlossen. Der Druckminderer-Oberteil weist einen ringförmigen ersten Teil auf, der mit dem Druckminderer-Unterteil verschraubt ist. Der erste Teil ist über Stege mit einem zweiten, ringförmigen Teil verbunden, der einen Ventildurchgang und einen Ventilsitz bildet. Mit der Regelmembran ist ein Ventilstößel verbunden, der sich koaxial zu Druckminderer-Ober- und Unterteil durch den Ventildurchgang erstreckt und an seinem Ende den Ventilschließkörper trägt. Auf dem Druckminderer-Unterteil liegt ein Druckring, welcher die Ränder der Membran festklemmt. Auf dem Druckring sitzt ein kappenförmiges Federgehäuse, in welchem die Belastungsfeder mit Mitteln zur Einstellung der Federvorspannung untergebracht ist. Eine Kunststoffkappe greift mit einem nach innen vorstehenden Rand über einen vorstehenden Rand des Federgehäuses. Die Kunststoffkappe ist mit dem Armaturengehäuse verschraubt und hält die Baugruppe in Anlage an dem Armaturengehäuse.

Innerhalb der Kunststoffkappe ist die Einlaßdruckkammer gebildet, durch welche der Ventilstößel sich zentral hindurch erstreckt. Das Armaturengehäuse bildet eine Ausgangsdruckkammer. Ein durch den Ventilschließkörper und den Ventilstößel verlaufender Kanal verbindet die Ausgangsdruckkammer mit der Regeldruckkammer.

Um eine Störung der Funktion des Druckminderers durch Schmutzpartikel im Wasser zu verhindern, ist ein Schmutzfänger vorgesehen. Dieser Schmutzfänger ist ein zylindrisches Sieb oder Filter, das zwischen dem ersten und dem zweiten Teil des Druckminderer-Oberteils koaxial zu dem Ventilstößel gehalten ist. Dieser Schmutzfänger unterteilt die Einlaßdruckkammer in eine einlaßseitige und eine regelventilseitige Teilkammer.

Es ist erforderlich, diesen Schmutzfänger in bestimmten Zeitabständen zu reinigen. Zu diesem Zweck wird nach dem Stand der Technik nach Absperren der Verbindung zur Versorgungsleitung die Druckminderer-Baugruppe ausgebaut.

Durch die DE 37 14 660 A1 ist eine Filterarmatur mit einem Druckminderer bekannt. Die Filterarmatur enthält einen zylindrischen Filter und eine zylindrische Saugeinrichtung, die mit begrenzten Saugöffnungen an der einlaßseitigen Oberfläche des Filters anliegt und über ein Auslaßventil mit einem Abfluß verbindbar ist. Zum Bewegen der Saugeinrichtung über die Oberfläche des Filters ist ein axial bewegliches Hubglied vorgesehen, das auf einer Seite von dem Einlaßdruck beaufschlagt ist und auf der anderen Seite einen Raum begrenzt, der mit dem Einlaß über die als Drosselstelle wirkende Saugeinrichtung verbunden ist und von dem Auslaßventil abgeschlossen ist. Beim Öffnen des Auslaßventils entsteht an dem Hubglied und der Saugeinrichtung eine Druckdifferenz. Dadurch führt das Hubglied einen axialen Hub aus. Die Saugeinrichtung ist so an dem Hubglied angebracht, daß sie dabei in Längsrichtung, axial über die Oberfläche des Filters bewegt wird.

Bei der DE 37 14 660 A1 ist innerhalb des Filters ein Druckminderer mit einer in einem Gehäuse eingespannten, federbelasteten Regelmembran untergebracht. Die Filterarmatur weist zwei koaxiale, rohrförmige Ansätze auf, die zwischen sich einen Ringraum bilden. Der Ringraum ist mit dem Einlaß verbunden und bildet eine Einlaßdruckkammer. Der innere Ansatz trägt einen Ventilsitzkörper mit einem Ventilsitz, der den Ventildurchgang des Druckminderer-Regelventils bildet. Der Druckminderer sitzt mit einem Gehäuse koaxial in einer Filtertasse. Der Druckminderer weist ein von der Regelmembran über einen Ventilstößel verbundenes Regelventil auf, das mit einem Ventilsitz zusammenwirkt und die Verbindung zwischen dem Innenraum des Filters und einem Auslaß beherrscht. Die Regelmembran begrenzt eine Regeldruckkammer. Die Regeldruckkammer ist über eine durch den Ventilschließkörper des Regelventils und den Ventilstößel verlaufenden Kanal mit dem Auslaß verbunden. Das Filter ist zwischen einem Flansch des inneren rohrförmigen Ansatzes und einem Flansch am Gehäuse des Druckminderers gehalten und umgibt dieses Gehäuse praktisch vollständig.

Der zylindrische Filter unterteilt hierbei als Schmutzfänger eine Einlaßdruckkammer in eine einlaßseitige und eine regelventilseitige Teilkammer.

Die bekannte Konstruktion ist sperrig und aufwendig.

Die DE 197 35 893 A1 beschreibt eine Filterarmatur für Trinkwasser mit einem Druckminderer und einem einlaßseitig von dem Druckminderer angeordneten Filter. Der Filter ist dabei zylindrisch und mit einer Absaugvorrichtung versehen, die axial über den Filter geführt wird. Der Druckminderer ist außerhalb des Filters und quer zur Achse des Filters im Gehäuse angeordnet. Die aus Filterarmatur und Druckminderer gebildete Baugruppe ist an einen Verteiler mit mehreren Anschlüssen und ein zwischen Verteiler und Baugruppe angeordnetes Umschaltventil angeschlossen. Durch das Umschaltventil sind wahlweise Strömungswege zwischen einem Anschluß des Verteilers als Einlaß nur über den Filter oder über die Reihenschaltung vom Filter und Druckminderer zu einem anderen Anschluß als Auslaß herstellbar.

Der Erfindung liegt die Aufgabe zugrunde, einen Druckminderer der eingangs erwähnten Art konstruktiv zu vereinfachen.

Erfindungsgemäß wird diese Aufgabe dadurch gelöst, daß die Rückspülmittel begrenzte Winkelbereiche des Schmutzfängers überdecken und zum Erfassen des gesamten Umfangs des Schmutzfängers um die Achse des Schmutzfängers verdrehbar sind.

Die Rückspülmittel erstrecken sich jeweils nur über begrenzte Winkelbereiche. Zwischen diesen Winkelbereichen bleibt der Schmutzfänger im Betrieb frei, so daß das Wasser durch den Schmutzfänger in die regelventilseitige Teilkammer eintreten kann. Zum Absaugen des gesamten Schmutzfängers werden die Rückspülmittel um die Achse des Schmutzfängers verdreht. Dabei kann nacheinander die gesamte Oberfläche des Schmutzfängers überstrichen werden. Erstrecken sich beispielsweise die Rückspülmittel über vier, jeweils um 90° gegeneinander versetzte Winkelbereiche, die relativ schmal sein können, dann genügt eine Verdrehung der Rückspülmittel über 90°, um die gesamte Oberfläche des Schmutzfängers zu erfassen. Eine Verdrehung der Rückspülmittel über einen begrenzten Bereich hinweg läßt sich konstruktiv leichter bewerkstelligen als eine Längsverschiebung von ringförmigen Rückspülmitteln über die gesamte Höhe des Schmutzfängers.

Eine besonders vorteilhafte Konstruktion besteht darin, daß die Rückspülmittel einen Ringkörper mit einer Ringkammer aufweisen, der auf der Außenseite mit zwei im Abstand voneinander angeordneten Dichtringen abdichtend und in einem Gehäuse des Druckminderers geführt ist und den Schmutzfänger umgibt, an dem Ringkörper axial vorstehende, an den Schmutzfänger angrenzende, zu dem Schmutzfänger hin offene Saugrippen vorgesehen sind, die mit der Ringkammer des Ringkörpers verbunden sind, der Ringkörper um den Schmutzfänger herum drehbar ist und Mittel zur Erzeugung eines gegenüber dem Einlaßdruck verminderten Druckes in der Ringkammer vorgesehen sind.

Dann sind zwischen den Saugrippen Flächen des Schmutzfängers Flächen frei, wo das Wasser durch den Schmutzfänger hindurch zu dem Regelventil des Druckminderers strömen kann. Der verminderte Druck wird in der Ringkammer erzeugt. Durch Verdrehen des Ringkörpers werden die Saugrippen in Umfangsrichtung über den Schmutzfänger geführt.

Der verminderte Druck in der Ringkammer kann dadurch erzeugt werden, daß in dem Gehäuse um den Ringkörper herum ein sich über einen Winkelbereich erstreckender Umfangsschlitz vorgesehen ist, der durch Dichtringe des Ringkörpers, welche beiderseits des Umfangsschlitzes am Gehäuse anliegen, gegen den Ringkörper abgedichtet ist, eine Auslaßleitung durch den Schlitz hindurch in die Ringkammer geführt ist und in der Auslaßleitung ein Absperrventil angeordnet ist.

Dann wird durch Öffnen des Absperrventils in der Ringkammer Atmosphärendruck erzeugt. Innerhalb des Schmutzfängers herrscht der Eingangsdruck. Dadurch wird eine Rückspül-Strömung aus der Einlaßkammer durch den Schmutzfänger hindurch, durch die Saugrippen und durch den Ringkanal zu dem von dem Absperrventil beherrschten Auslaß erzeugt. Schmutzpartikel, die auf der Außenseite des Schmutzfängers zurückgehalten worden waren, werden von dieser Rückspül-Strömung mitgerissen und abgeführt. Ein weiterer Vorteil dieser Anordnung besteht darin, daß das aus dem Gehäuse herausragende Absperrventil zugleich einen abdichtend aus dem Gehäuse herausgeführten Handgriff bildet, mittels dessen der Ringkörper mit den Saugrippen von Hand um die Achse des zylindrischen Schmutzfängers verdreht werden kann.

Die Saugrippen sind mit geringem Spiel um den Schmutzfänger herum angeordnet. Gröbere Schmutzpartikel können dabei über den Kontakt Saugrippe-Schmutzfänger nicht unmittelbar abgesaugt werden. Sie würden bei der Drehbewegung der Rückspülmittel von den Saugrippen auf deren Außenseite abgestreift werden und unter dem Einfluß der Schwerkraft nach unten auf den Druckminderer-Oberteil sinken. Bei der Umfangsbewegung des Ringkörpers würden diese Partikel von den Saugrippen hin- und hergeschoben werden, ohne in das Innere des Saugrippen zu gelangen und abgeführt zu werden. Aus diesem Grund sind vorteilhafterweise die Saugrippen nach unten hin in axialer Richtung offen und ist dort um den Schmutzfänger herum ein Kranz von axialen Sacklöchern gebildet ist. Auf diese Weise werden die heruntergefallenen größeren Partikel von den Saugrippen bei der Drehbewegung in diese Sacklöcher "gekehrt". Wenn dann die Saugrippen mit ihren unteren Öffnungen wieder über die Sacklöcher hinwegstreichen, werden die Partikel dann angesaugt und mitgeführt.

Die Erfindung ist besonders vorteilhaft bei einem Druckminderer anwendbar, bei welchem ein schalenförmiges Druckminderer-Unterteil durch eine federbelastete Regelmembran abgeschlossen ist und eine mit einem Ausgangsdruck beaufschlagte Regeldruckkammer bildet, ein dazu gleichachsiger Druckminderer-Oberteil einen ersten, ringförmigen Teil aufweist, der an dem Druckminderer-Unterteil angebracht ist und der über Stege mit einem zweiten ringförmigen Teil verbunden ist, welcher einen Ventilsitz mit einem Ventildurchgang eines Regelventils bildet, ein Ventilstößel mit der Regelmembran verbunden ist, sich durch die Regeldruckkammer, den Druckminderer-Unterteil und den Ventildurchgang erstreckt und einen Ventilschließkörper trägt, der mit dem Ventilsitz das Regelventil bildet, und der Schmutzfänger koaxial zu dem Ventilstößel zwischen dem ersten ringförmigen Teil und dem zweiten ringförmigen Teil gehalten ist. Dabei ist vorteilhafterweise durch eine mit einem Armaturengehäuse verschraubte Befestigungskappe ein die Belastungsfeder enthaltendes Federgehäuse, Druckminderer-Unterteil und Druckminderer-Oberteil unter Festklemmen der Regelmembran gegen das Armaturengehäuse festgezogen, wobei die Einlaßdruckkammer innerhalb der Befestigungskappe gebildet ist, und der Schlitz für die Auslaßleitung in der Befestigungskappe gebildet.

Das ergibt eine sehr kompakte Anordnung eines Druckminderers mit Rückspülung.

Ein Ausführungsbeispiel der Erfindung ist nachstehend unter Bezugnahme auf die zugehörigen Zeichnungen näher erläutert.
- Fig.1: zeigt einen Längsschnitt eines Druckminderers, bei welchem eine Reinigung eines Schmutzfängers durch Rückspülung erfolgt.
- Fig.2: zeigt eine Einzelheit XY von Fig. 1.
- Fig.3: ist eine perspektivische Darstellung der Rückspülvorrichtung bei dem Druckminderer von Fig.1.
- Fig.4: zeigt einen Querschnitt durch die Rückspülvorrichtung von Fig.3.

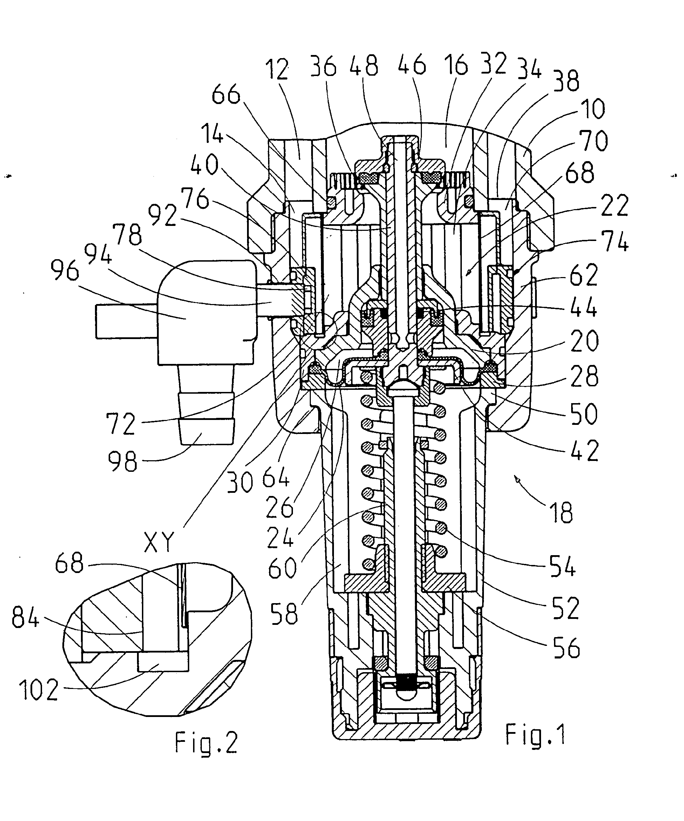

In Fig.1 ist mit 10 (abgebrochen) ein Armaturengehäuse bezeichnet. Das Armaturengehäuse 10 hat im einfachsten Fall einen Einlaßstutzen, der über einen äußeren Ringkanal 12 mit einer Einlaßdruckkammer 14 verbunden ist, und einen Auslaßstutzen, der mit einer zentralen Auslaßkammer 16 verbunden ist. An das Armaturengehäuse 10 ist eine Druckminderer-Baugruppe angesetzt, die generell mit 18 bezeichnet ist.

Die Druckminderer-Baugruppe 18 enthält einen Druckminderer-Unterteil 20 und einen Druckminderer-Oberteil 22. Die Bezeichnung "Unterteil" und "Oberteil" bezieht sich auf die Anordnung in Fig.1, wo Teil 20 unten und Teil 22 oben liegen. Der Druckminderer-Unterteil 20 ist schalenförmig und sich nach oben in Fig.1 hin verjüngend ausgebildet. Der Druckminderer-Unterteil 20 ist durch eine Regelmembran 24 abgeschlossen und bildet eine Regeldruckkammer 26. Ein Druckring 28 liegt auf dem Rand der Regelmembran 24 auf und klemmt diesen fest. Auf den Druckminderer-Unterteil 20 ist der Druckminderer-Oberteil 22 aufgeschraubt. Der Druckminderer-Oberteil 22 weist einen ersten ringförmigen Teil 30 und einen zweiten ringförmigen Teil 32 auf. Der erste ringförmige Teil 30 ist mit dem Druckminderer-Unterteil 20 verschraubt. Der zweite ringförmige Teil 32 ist mit dem ersten ringförmigen Teil 30 über Stege 34 verbunden. Der zweite ringförmige Teil 32 bildet auf seiner dem Druckminderer-Unterteil 20 abgewandten Seite einen Ventilsitz 36 mit einem Ventildurchgang 38. Ein Ventilstößel 40 ist mit einem Membranteller 42 der Regelmembran 24 verbunden. Der Ventilstößel 40 ist mittels einer Dichtung 44 durch den "Boden" des schalenförmigen Druckminderer-Unterteils 20 hindurchgeführt und erstreckt sich durch den Ventildurchgang 38. An seinem Ende trägt der Ventilstößel 40 einen Ventilschließkörper 46, der mit dem Ventilsitz 36 zur Bildung des Regelventils des Druckminderers zusammenwirkt. Durch den Ventilschließkörper 46 und den Ventilstößel 40 hindurch verläuft ein Kanal 48, über welchen der Ausgangsdruck stromab von dem Regelventil auf die Regeldruckkammer 26 übertragen wird.

Auf dem Druckring 28 sitzt ein mit einem äußeren Rand 50 versehenes, kappenartiges Federgehäuse 52. Das Federgehäuse 52 enthält eine vorgespannte Schraubenfeder 54. Die Schraubenfeder 54 liegt an dem Membranteller 42 der Regelmembran 24 an. Die Schraubenfeder 54 ist an einem verstellbaren Federwiderlager 56 abgestützt. Das Federwiderlager ist durch Führungen 58 unverdrehbar in dem Federgehäuse geführt und sitzt auf einer mit Gewinde versehenen Stellspindel 60. Durch Verdrehen der Stellspindel 58 kann das Federwiderlager 56 axial verstellt werden. Dadurch wird die Vorspannung der Schraubenfeder 54 und damit der geregelte Ausgangsdruck verändert.

Eine Kunststoffkappe 62 von zylindrischer Grundform greift mit einem nach innen vorstehenden Rand 64 über den äußeren Rand 50 des Federgehäuses 52. Die Kunststoffkappe 62 ist an der Außenwand des Ringkanals 12 in das Armaturengehäuse 10 eingeschraubt. Dabei werden das Federgehäuse 52, der Druckminderer-Unterteil 20 und der Druckminderer-Oberteil 22 gegen das Armaturengehäuse 10 festgezogen. Der zweite ringförmige Teil 32 des Druckminderer-Oberteils 22 sitzt dann abgedichtet in der zentralen Auslaßkammer 16. Dabei erfolgt durch einen Dichtring 66 eine Abdichtung gegen die Innenwandung der Auslaßkammer 16.

Zwischen dem ersten ringförmigen Teil 30 und dem zweiten ringförmigen Teil 32 des Druckminderer-Oberteils 22 sitzt ein zylindrischer Schmutzfänger 68 in Form eines Siebes oder Filters. Der Schmutzfänger 68 unterteilt die Einlaßdruckkammer 14 in eine einlaßseitige Teilkammer 70 und eine regelventilseitige Teilkammer 72.

Das ist im wesentlichen der Aufbau eines bekannten Druckminderers, wie er oben zum Stand der Technik beschrieben ist.

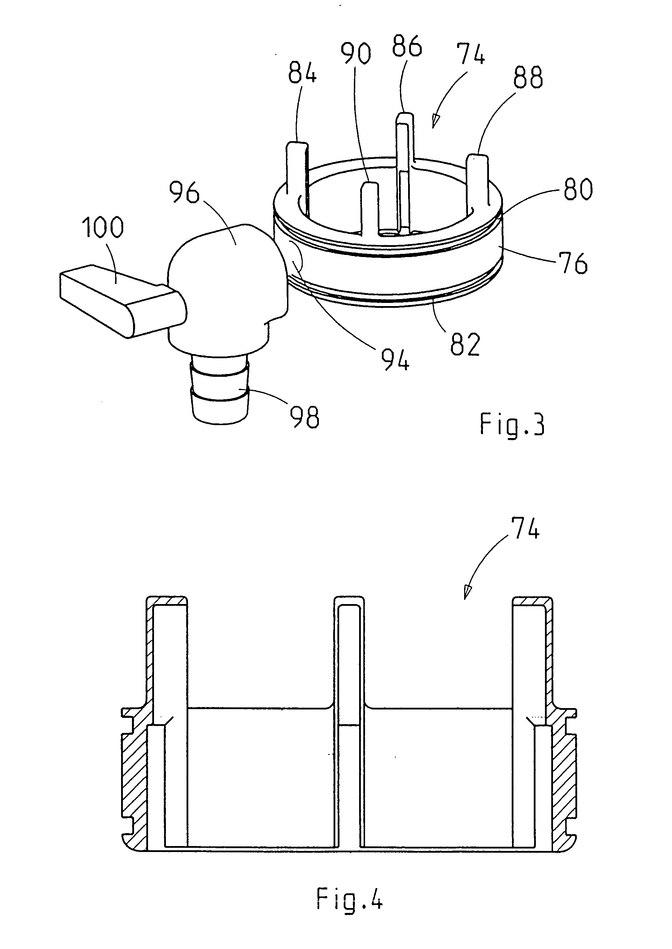

Der Druckminderer weist Rückspülmittel zur Erzeugung einer Rückspül-Strömung durch den Schmutzfänger 68 aus der regelventilseitigen Teilkammer 72 in die einlaßseitige Teilkammer 70 auf. Die Rückspülmittel sind generell mit 74 bezeichnet und in den Figuren 3 und 4 im einzelnen dargestellt. Diese Rückspülmittel gestatten es von Zeit zu Zeit, den auf der Außenseite des Schmutzfängers 68 zurückgehaltenen Schmutz abzusaugen und zu einem Auslaß abzufördern.

Die Rückspülmittel 74 enthalten einen Ringkörper 76 mit einer Ringkammer 78. Der Ringkörper 76 trägt auf seiner Außenseite in Umfangsrichtung verlaufende und in axialem Abstand voneinander angeordnete Dichtringe 80 und 82. Diese Dichtringe 80 und 82 liegen an der Innenwandung der Kunststoffkappe 62 an, die einen Teil des Gehäuses des Druckminderers bildet. An dem Ringkörper 76 sitzen axial vorstehende, an den Schmutzfänger 68 angrenzende und zu dem Schmutzfänger 68 und nach unten hin offene, mit der Ringkammer 78 des Ringkörpers 76 verbundene Saugrippen 84, 86, 88, 90. Die Saugrippen 84, 86, 88, 90 sind jeweils um 90° gegeneinander winkelversetzt. Zwischen den Saugrippen 84, 86, 88, 90, die sich jeweils nur über einen relativ kleinen Winkelbereich erstrecken, liegt der Schmutzfänger 68 auf Winkelbereichen von fast 90° frei, so daß das Wasser dort durch den Schmutzfänger 68 hindurch aus der einlaßseitigen Teilkammer 70 in die regelventilseitige Teilkammer 72 strömen kann.

In der Kunststoffkappe 62 ist zwischen den Dichtringen 80 und 82 ein Umfangsschlitz 92 angebracht. Der Umfangsschlitz erstreckt sich über einen Winkelbereich von etwas mehr als 90°. Durch den Umfangsschlitz 92 ist ein Rohr 94 geführt, das mit dem Ringkörper 76 fest verbunden ist und in der Ringkammer 78 mündet. Das Rohr 94 ist mit einem Absperrventil 96 verbunden. Das Absperrventil 96 beherrscht die Verbindung zwischen dem Rohr 94 und einem Ablaufstutzen 98. Das Absperrventil 96, vorzugsweise ein Kugelventil, ist durch einen Handgriff 100 zwischen einer Schließstellung und einer Offenstellung verdrehbar. In der Offenstellung ist die Ringkammer 78 über das Rohr 94 und den Ablaufstutzen 98 mit der Atmosphäre verbunden. Dabei strömt Wasser aus der regelventilseitigen Teilkammer 72, das im wesentlichen unter dem Einlaßdruck steht, in Rückspülrichtung durch den Schmutzfänger 68 in die Saugrippen 84, 86, 88, 90 und über die Ringkammer 78, das Rohr 94 und den Ablaufstutzen 98 zu einem Ablauf. Schmutzpartikel, welche im normalen Betrieb auf der Außenseite des Schmutzfängers 68 zurückgehalten wurden, werden dann zurückgespült und abgeführt. An dem Absperrventil 96 kann der Ringkörper 76 von Hand um 90° um den Schmutzfänger herum verdreht werden. Dabei überstreichen die vier Saugrippen 84, 86, 88, 90 die gesamte wirksame Oberfläche des Schmutzfängers 68.

Die Saugrippen 84, 86, 88, 90 umgeben den Schmutzfänger mit geringem Spiel. Größere Schmutzpartikel werden daher nicht von den Saugrippen unmittelbar abgesaugt sondern von der Außenfläche des Schmutzfängers 68 abgekratzt. Sie sinken dann nach unten und würden bei der Verdrehung des Ringkörpers 76 von den Außenseiten der Saugrippen 84, 86, 88, 90 nur hin- und hergeschoben. Aus diesem Grunde ist um die Außenfläche des Schmutzfängers 68 herum in dem ersten ringförmigen Teil 30 des Druckminderer-Oberteils 22 ein Kranz von Sacklöchern 102 gebildet, wie am besten aus der Einzelheit XY von Fig.2 ersichtlich ist. In diese Sacklöcher 102 werden die heruntergesunkenebn Partikel von den Außenseiten der Saugrippen "hineingefegt". Beim nächsten Durchgang einer Saugrippe 84, 86, 88 bzw. 90 werden die Partikel dann über das unten offene Ende der Saugrippe 84, 86, 88 bzw. 90 ebenfalls angesaugt und abgeführt.

## Patentansprüche

1. Druckminderer mit einer Einlaßdruckkammer (14), die durch einen zylindrischen Schmutzfänger (68) in eine einlaßseitige und eine regelventilseitige Teilkammer (70 bzw. 72) unterteilt ist, bei welcher in der einlaßseitigen Teilkammer (70) angrenzend an den Schmutzfänger (68) Rückspülmittel (74) zur Erzeugung einer Rückspül-Strömung durch den Schmutzfänger (68) aus der regelventilseitigen Teilkammer (72) vorgesehen sind, **dadurch gekennzeichnet daß** die Rückspülmittel (74) begrenzte Winkelbereiche des Schmutzfängers (68) überdecken und zum Erfassen des gesamten Umfangs des Schmutzfängers (68) um die Achse des Schmutzfängers (68) verdrehbar sind.

2. Druckminderer nach Anspruch 1, **dadurch gekennzeichnet, daß**
(a) die Rückspülmittel (74) einen Ringkörper (76) mit einer Ringkammer (78) aufweisen, der auf der Außenseite mit zwei im Abstand voneinander angeordneten Dichtringen (80,82) abdichtend in einem Gehäuse (62) des Druckminderers geführt ist und den Schmutzfänger (68) umgibt,
(b) der Ringkörper (76) axial vorstehende, an den Schmutzfänger (68) angrenzende, zu dem Schmutzfänger (68) hin offene und mit der Ringkammer (78) des Ringkörpers (76) verbundene Saugrippen (84,86,88,90) vorgesehen sind,
(c) der Ringkörper (76) um den Schmutzfänger (68) herum drehbar ist und
(d) Mittel (94,96,98) zur Erzeugung eines gegenüber dem Einlaßdruck verminderten Druckes in der Ringkammer (78) vorgesehen sind.

3. Druckminderer nach Anspruch 2, **dadurch gekennzeichnet, daß**
(a) in dem Gehäuse (62) um den Ringkörper (76) herum ein sich über einen Winkelbereich erstreckender Umfangsschlitz (92) vorgesehen ist, der durch Dichtringe (80,82), welche beiderseits des Umfangsschlitzes (92) am Gehäuse (62) anliegen, gegen den Ringkörper (76) abgedichtet ist,
(b) eine Auslaßleitung (94,98) durch den Schlitz (92) hindurch in die Ringkammer (78) geführt ist und
(c) in der Auslaßleitung (94,98) ein Absperrventil (96) angeordnet ist.

4. Druckminderer nach Anspruch 3, **dadurch gekennzeichnet, daß** die Saugrippen (84,86,88,90) nach unten hin in axialer Richtung offen sind und dort um den Schmutzfänger (68) herum ein Kranz von axialen Sacklöchern (102) gebildet ist.

5. Druckminderer nach Anspruch 3 oder 4, **dadurch gekennzeichnet, daß**
(a) ein schalenförmiges Druckminderer-Unterteil (20) durch eine federbelastete Regelmembran (24) abgeschlossen ist und eine mit einem Ausgangsdruck beaufschlagte Regeldruckkammer (26) bildet,
(b) ein dazu gleichachsiger Druckminderer-Oberteil (22) einen ersten, ringförmigen Teil (30) aufweist, der an dem Druckminderer-Unterteil (20) angebracht ist und der über Stege (34) mit einem zweiten ringförmigen Teil (32) verbunden ist, welcher einen Ventilsitz (36) mit einem Ventildurchgang (38) eines Regelventils bildet,
(c) ein Ventilstößel (40) mit der Regelmembran (24) verbunden ist, sich durch die Regeldruckkammer(26), den Druckminderer-Unterteil (20) und den Ventildurchgang (38) erstreckt und einen Ventilschließkörper (46) trägt, der mit dem Ventilsitz (36) das Regelventil bildet, und
(d) der Schmutzfänger (68) koaxial zu dem Ventilstößel (40) zwischen dem ersten ringförmigen Teil (30) und dem zweiten ringförmigen Teil (32) gehalten ist.

6. Druckminderer nach Anspruch 5, **dadurch gekennzeichnet, daß**
(a) durch eine mit einem Armaturengehäuse (10) verschraubte' Befestigungskappe (62) ein die Belastungsfeder (54) enthaltendes Federgehäuse (52), Druckminderer-Unterteil (20) und Druckminderer-Oberteil (22) unter Festklemmen der Regelmembran (24) gegen das Armaturengehäuse (10) festgezogen ist, wobei die Einlaßdruckkammer (14) innerhalb der Befestigungskappe (62) gebildet ist, und
(b) der Schlitz (92) für die Auslaßleitung (94,98) in der Befestigungskappe (62) gebildet ist.
